# FASCICULE DE BREVET EUROPEEN

(11) **EP 0 964 460 B1**
(45) Date de publication et mention de la délivrance du brevet: **04.05.2005**
(21) Numéro de dépôt: 99401342.3
(22) Date de dépôt: 04.06.1999
(51) Int. Cl.: H01M 2/02, H01M 10/50

(54) **Batterie monobloc comportant un dispositif d'échange thermique par circulation d'un fluide**
Monoblock Batterie mit Wärmtauschvorrichtung mittels Durchleiten einer Flüssigkeit
Monobloc battery having a heat exchange device by means of a circulating fluid

(30) Priorité: 11.06.1998 FR 9807341
(43) Date de publication de la demande: 15.12.1999
(73) Titulaire: Saft Finance S.à.r.l., 1471 Luxembourg (LU)
(72) Inventeur: Verhoog, Roelof, 33200 Bordeaux (FR)
(74) Mandataire: Pochart, François

(56) Documents cités:
- EP-A- 0 596 778
- EP-A- 0 596 794
- EP-A- 0 613 204
- EP-A- 0 624 916
- FR-A- 2 472 002
- FR-A- 2 633 102
- GB-A- 2 003 653
- PATENT ABSTRACTS OF JAPAN vol. 097, no. 001, 31 janvier 1997 (1997-01-31) -& JP 08 227700 A (SHIN KOBE ELECTRIC MACH CO LTD), 3 septembre 1996 (1996-09-03)
- PATENT ABSTRACTS OF JAPAN vol. 010, no. 201 (E-419), 15 juillet 1986 (1986-07-15) -& JP 61 045571 A (YUASA BATTERY CO LTD), 5 mars 1986 (1986-03-05)

## Description

La présente invention concerne une batterie monobloc comportant un dispositif échangeur de calories par circulation d'un fluide.

Dans une batterie de conception monobloc, les faisceaux électrochimiques sont contenus dans les alvéoles d'un conteneur unique. Le conteneur est habituellement de forme prismatique. Chaque faisceau électrochimique est constitué par l'assemblage alternatif d'électrodes positives et négatives séparées les unes des autres par un séparateur, puis imprégné d'un électrolyte. Le faisceau électrochimique présente deux petites faces correspondant aux tranches des électrodes empilées et deux grandes faces parallèles à la surface des électrodes.

Ces batteries sont utilisées en particulier pour l'alimentation des véhicules électriques. Une batterie monobloc Nickel-Cadmium ou Nickel-Métal Hydrurable possède une capacité comprise entre 5Ah et 250Ah.

On sait que les différents états d'utilisation d'une batterie d'accumulateurs (charge, surcharge, décharge) conduisent à une élévation de la température qui modifit ses performances. Le transport des calories par circulation d'un fluide, notamment un liquide caloporteur, est la manière la plus efficace de refroidir la batterie. De nombreux systèmes d'échange de chaleur, indépendants de la batterie et placés à son contact, ont été proposés. La plupart de ces systèmes augmentent de manière rédhibitoire le poids et l'encombrement de la batterie.

Une batterie monobloc comportant un dispositif de refroidissement d'encombrement réduit a été récemment proposée. La batterie possède un conteneur unique en matière plastique de forme prismatique constitué d'un bac et d'un couvercle portant les bornes de sortie de courant. Le bac comporte des alvéoles, séparées par des cloisons, dans lesquelles sont placés les faisceaux électrochimiques. Le dispositif de refroidissement comporte deux flasques soudés de manière étanche respectivement à deux parois opposées du bac en matière plastique. Chacun des flasques définit avec la paroi correspondante un compartiment de circulation pour le liquide présentant à sa partie supérieure un orifice d'entrée et un orifice de sortie débouchant dans le couvercle de la batterie.

Pour que chaque faisceau soit également refroidi, un tel dispositif est de préférence placé sur les parois du bac faisant face aux tranches des électrodes. Dans le cas des batteries de forte puissance, le refroidissement des tranches d'électrodes est insuffisant pour maintenir la batterie à une température convenable. Pour augmenter la surface d'échange thermique, il est donc nécessaire que le transfert des calories s'effectue sur la paroi en vis à vis des grandes faces de chacun des faisceaux.

Une batterie monobloc comportant un tel système d'échange thermique, dont le conteneur se compose d'un bac unique prismatique et d'un couvercle en plusieurs parties, est décrit dans le brevet européen EP-0 624 916. Les compartiments pour la circulation du liquide sont formées par deux flasques disposés face-à-face. Ces compartiments sont utilisés comme cloisons séparant les alvéoles. A cet effet le périmètre des cloisons est engagé dans des rainures formées sur les parois du bac. Chaque compartiment est individuellement relié à une rampe distributrice/collectrice. Afin d'éviter que le liquide pénètre à l'intérieur des alvéoles, un bloc de jonction emboité dans un logement assure la communication entre chaque compartiment et la rampe. Ce système d'assemblage complexe possède de nombreuses jonctions, ce qui le rend peu fiable notamment en ce qui concerne le risque de fuite de liquide caloporteur dans les alvéoles.

L'entrée et la sortie du liquide de chaque compartiment sont reliées à une entrée et une sortie commune par des rampes longitudinales aménagées dans un couvercle rapporté. La présence de ces deux rampes longitudinales provoque un encombrement de la surface disponible sur le couvercle. Pour compenser cet encombrement, le couvercle ne porte que deux bornes électriques nécessaires au raccordement à un circuit extérieur. Une telle disposition implique l'utilisation d'un dispositif de liaison électrique interne devant traverser d'une façon étanche la cloison de séparation de deux alvéoles contiguës, comprenant le compartiment de circulation du liquide. Les dispositifs de traversée ne sont pas suffisamment fiables électriquement et mécaniquement pour permettre sont utilisation dans un véhicule électrique.

Les rampes de diamètre croissant sont formées par la jonction de deux pièces complémentaires du couvercle portant chacune des canaux. Le couvercle formé de trois parties superposées vient s'ajuster sur le bac . Pour une batterie comprenant un nombre de faisceaux électrochimiques donné, les dimensions des différentes pièces composant le conteneur sont fixées. Ainsi à chaque batterie d'une capacité donnée correspondent des pièces spécifiques, ce qui rend leur fabrication industrielle moins flexible et plus coûteuse.

La présente invention a pour but de proposer une batterie monobloc, munie d'un dispositif d'échange thermique efficace et d'encombrement réduit, dont le nombre de faisceaux électrochimiques soit aisément modifiable.

La présente invention propose une batterie monobloc, munie d'un dispositif d'échange thermique, dont la réalisation est plus simple et plus fiable que les dispositifs déjà connus.

L'objet de la présente invention est une batterie monobloc comprenant un bac divisé en alvéoles recevant chacune un faisceau électrochimique, un moyen de fermeture dudit bac, et un dispositif d'échange thermique par un fluide en regard des grandes faces dudit faisceau, la circulation dudit fluide s'effectuant dans un compartiment défini par deux flasques, ledit compartiment comportant un orifice d'entrée dudit fluide communiquant avec une rampe distributrice commune et un orifice de sortie dudit fluide communiquant avec une rampe collectrice commune.

La batterie selon l'invention est caractérisée en ce que ledit bac se compose d'au moins deux éléments juxtaposés sensiblement identiques, chaque élément formé d'une seule pièce comprend au moins une desdites alvéoles délimitée par au moins une paroi située en regard d'une grande face dudit faisceau qui constitue l'un desdits flasques, et en ce que chaque élément comporte en outre une portion de ladite rampe distributrice et de ladite rampe collectrice, lesdits éléments étant solidarisés de telle manière que lesdits flasques une fois placés face-à-face forment un compartiment de circulation étanche et que lesdites portions d'une même rampe soient dans le prolongement l'une de l'autre.

La batterie monobloc selon l'invention comprend un bac généralement mais non exclusivement en matière plastique. Le bac est divisé par des parois interalvéoles, chacune des alvéoles étant destinée à recevoir un faisceau électrochimique.

Selon la présente invention, le bac est formé par l'assemblage côte à côte de plusieurs éléments rendus solidaires, par exemple par soudure ou collage. Chaque élément représente au moins une alvéole délimitée par des parois, mais peut en réunir deux ou plus. Chaque élément est fabriqué d'un seul tenant, par exemple par moulage. Les éléments sont ainsi formés d'une seule pièce ce qui restreint le nombre de liaisons.

La batterie comprend aussi un dispositif d'échange thermique par un fluide en regard des grandes faces du faisceau. La circulation du fluide s'effectue dans un compartiment plat défini par deux flasques qui est utilisé pour former au moins une des parois interalvéoles. Le compartiment comporte à sa partie supérieure un orifice d'entrée du fluide communiquant avec une rampe distributrice commune et un orifice de sortie dudit fluide communiquant avec une rampe collectrice commune.

Selon l'invention, l'une au moins des parois de chaque élément située en regard des grandes faces du faisceau constitue l'un des flasques. De préférence pour un éléments prismatique les deux faces opposées placées en vis-à-vis des grandes faces du faisceau électrochimique constituent chacune un flasque. Si l'élément comporte plus d'une alvéole, celles-ci sont de préférence solidarisées par la face en vis-à-vis des tranches des électrodes.

Les éléments sont reliés entre eux de telle manière que le flasque de l'un des éléments soit placé en face du flasque de l'élément contigu pour former un compartiment de circulation du fluide. Les éléments constituant les extrémités du bac ne possèdent d'élément contigu que d'un seul côté. Une seule des parois situées en regard des grandes faces du faisceau constitue l'un des flasques, qui est soudé au flasque de l'élément contigu.

Avantageusement l'élément placé à l'extrémité de la batterie est relié d'un côté à l'élément contigu, et du côté opposé aux autres éléments à une plaque constituant un flasque pour fermer le compartiment de circulation. Ce compartiment fermé par la plaque constitue la paroi latérale externe de la batterie. Le faisceau contenu dans l'élément d'extrémité de la batterie est ainsi régulé en température sur deux faces opposées de manière analogue aux éléments placés au centre de la batterie.

Selon un mode de réalisation préférentiel, ledit moyen de fermeture est placé à la partie inférieure dudit bac et constitue un fond fixé de manière étanche audit bac.

De préférence, ladite rampe distributrice et ladite rampe collectrice sont placées sur la face dudit bac opposée audit fond. En outre chaque élément porte sur la face opposée au fond les orifices nécessaires pour accueillir par exemple par alvéole deux bornes de sortie de courant et une soupape de sécurité, un orifice de remplissage en électrolyte, etc... Les portions des rampes comme les orifices sont réalisés en même temps que l'élément, par exemple par moulage. Chaque alvéole est munie d'une borne de sortie de courant pour chaque polarité. Le raccordement électrique des faisceaux électrochimiques s'effectue à l'extérieur des alvéoles, ce qui rend inutile tout dispositif de liaison électrique interne.

De préférence au moins l'un desdits flasques porte une pluralité de nervures, lesdites nervures formant des chicanes pour la circulation dudit fluide dans ledit compartiment alternativement dans une direction et dans la direction opposée. Selon une forme d'exécution de l'invention, l'un des deux flasques porte à sa partie supérieure l'orifice d'entrée et l'orifice de sortie du fluide; mais chacun des flasques formant le compartiment de circulation peut aussi porter la moitié de ces orifices.

Chacun des éléments comporte en outre une portion de la rampe distributrice et de la rampe collectrice. Les orifices pour l'entrée et la sortie du fluide de chaque compartiment communiquent respectivement avec la portion de rampe correspondante portée par l'élément sans jonction. Une fois les éléments placés l'un contre l'autre, chaque portion de rampe s'adapte parfaitement à la portion contigue correspondante afin de former une rampe distibutrice ou collectrice commune dont la longueur est fonction de celle de la batterie, c'est à dire du nombre d'éléments accolés.

La présente invention a comme avantage de proposer une batterie monobloc de conception modulaire dont la capacité peut être aisément modifiée en variant le nombre des éléments, qui sont identiques, à l'exception éventuelle des éléments d'extrémités comportant des modifications mineures. Seul le fond est de taille différente, mais il est envisageable que le fond soit également réalisé à partir d'éléments unitaires préalablement soudés ensemble.

La présente invention a aussi pour objet un procédé de fabrication de la batterie monobloc selon la présente invention. Ledit procédé comprend les étapes suivantes:
- on moule d'un seul tenant au moins deux desdits éléments,
- on place côte à côte lesdits deux éléments de telle sorte que lesdits flasques soit appliqués l'un contre l'autre et que lesdites portions de rampe se correspondent,
- on soude de manière étanche la périphérie dudit compartiment formé par lesdit flasques et la paroi desdites portions de rampe pour obtenir ledit bac,
- on introduit un faisceau électrochimique muni de ses bornes de sortie de courant dans chaque alvéole, on peut alors fixer les bornes dans les orifices prévus à cet effet,
- on soude ledit fond sur ledit bac, et enfin on introduit l'électrolyte dans les alvéoles, par exemple par l'orifice prévu à cet effet.

Selon un perfectionnement de l'invention, après avoir soudé de manière étanche la périphérie dudit compartiment formé par lesdits flasques et les parois desdites portions de rampe, on soude une plaque constituant un flasque à chaque extrémité pour obtenir ledit bac.

La présente invention a comme avantage de proposer un procédé pour la réalisation d'une batterie monobloc dont les éléments formant le bac sont d'abord thermosoudées entre eux ce qui assure l'étanchéité du circuit de fluide. Le circuit de fluide ne possède aucune soudure commune avec les alvéoles ce qui exclut tout risque de fuite du fluide vers les alvéoles.

L'invention sera mieux comprise et d'autres avantages et particularités apparaîtront à la lecture de la description qui va suivre, donnée à titre non limitatif, accompagnée des dessins annexés parmi lesquels:
- la figure 1 représente une vue en perspective du conteneur d'une batterie monobloc selon l'invention comprenant dix faisceaux électrochimiques,
- la figure 2 est une coupe selon II-II de la figure 1 montrant la disposition des faiceaux dans les alvéoles et la position du compartiment de circulation du fluide,
- la figure 3 est un agrandissement de la zone III de la figure 2,
- la figure 4 montre un élément central du bac de la figure 1 comprenant deux alvéoles,
- la figure 5, analogue à la figure 3, montre un élément d'extrémité du bac de la figure 1 comprenant deux alvéoles.

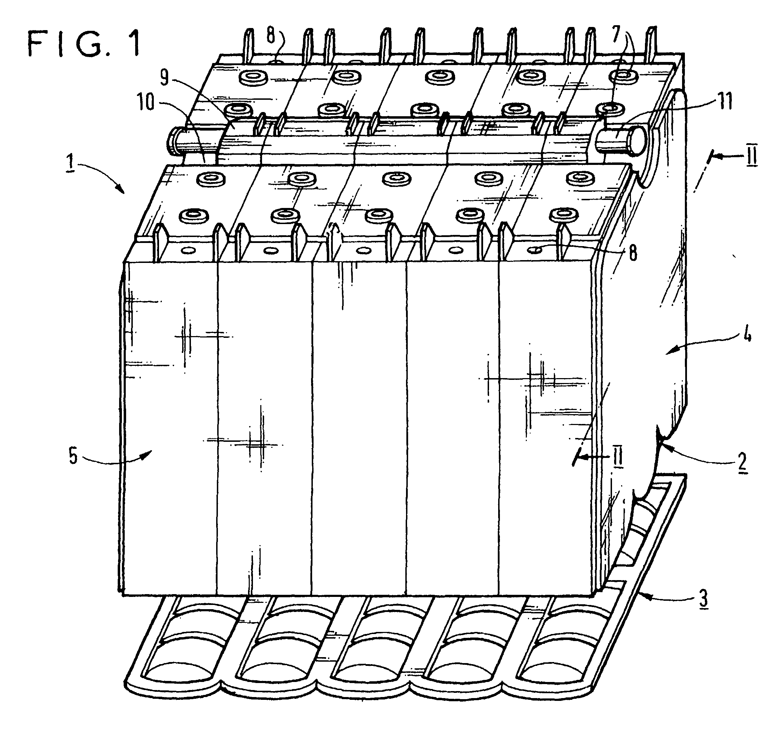

Le conteneur prismatique 1 d'une batterie selon l'invention est représenté sur la figure 1. Le conteneur 1 comprend un bac 2 en polypropylène et un moyen de fermeture 3 constituant un fond. Le bac 2 comporte deux parois latérales 4 et deux parois longitudinales 5, et une paroi supérieure transversale 6 opposée au fond 3. Le fond 3 est destiné à être thermosoudé sur le bac 2 une fois les faisceaux électrochimiques introduits dans leurs alvéoles respectives.

La paroi transversale 6 du bac 2 porte pour chaque alvéole deux orifices 7, recevant respectivement une borne de sortie de courant de chaque polarité, et une ouverture 8 servant en premier lieu à introduire l'électrolyte et fermée après remplissage par une soupape de sécurité. Une rampe centrale double 9 distributrice/collectrice réunit les entrées d'une part et les sorties d'autre part du liquide circulant dans le dispositif d'échange thermique. Selon une variante, la rampe 9 porte à chacune de ses extrémités une tubulure d'entrée 10 et une tubulure de sortie 11 pour le raccordement à un système de circulation de liquide ou bien à une autre batterie monobloc.

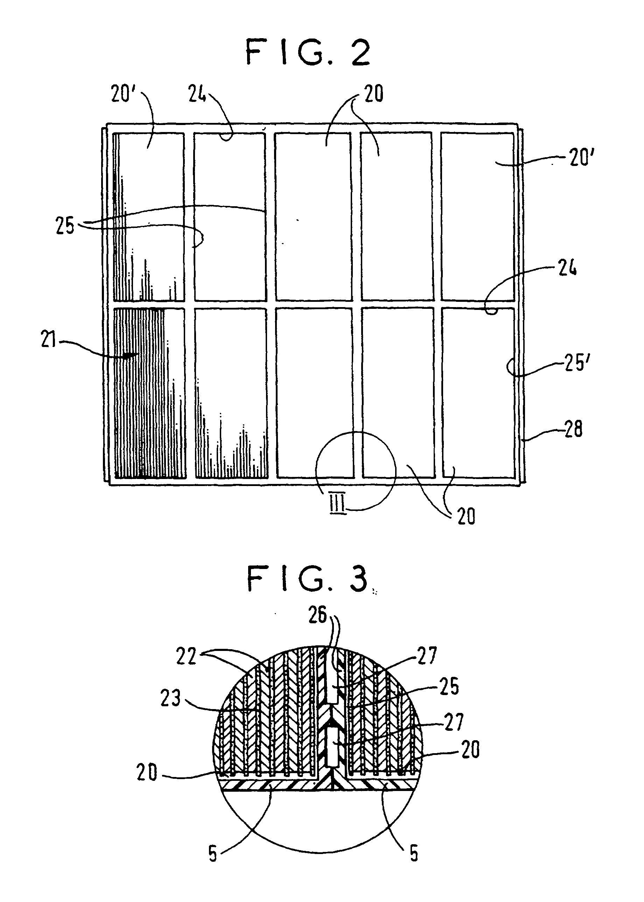

La figure 2 est une coupe horizontale de la batterie selon l'invention dont la figure 3 est une vue partielle agrandie. Le bac 2 est divisé en alvéoles 20 destinées à contenir chacune un faisceau électrochimique 21 constitué par l'assemblage alternatif d'électrodes 22 positives et négatives séparées les unes des autres par un séparateur 23. Les alvéoles 20 sont accolées par leurs faces 24 en regard de la tranche des électrodes. Les parois interalvéoles 25, en regard des grandes faces du faisceau, sont constituées de deux flasques 26 en vis-à-vis formant un compartiment 27 dans lequel circule un liquide caloporteur. A chaque extrémité du bac 2 se trouve une alvéole 20' reliée d'un coté à une alvéole 20 contigue, et limitée du côté opposé par une paroi 25'. La paroi 25' est formée d'un flasques 26 et d'une plaque 28 servant de flasque pour fermer le compartiment de circulation du fluide caloporteur sur la face externe des alvéoles 20'.

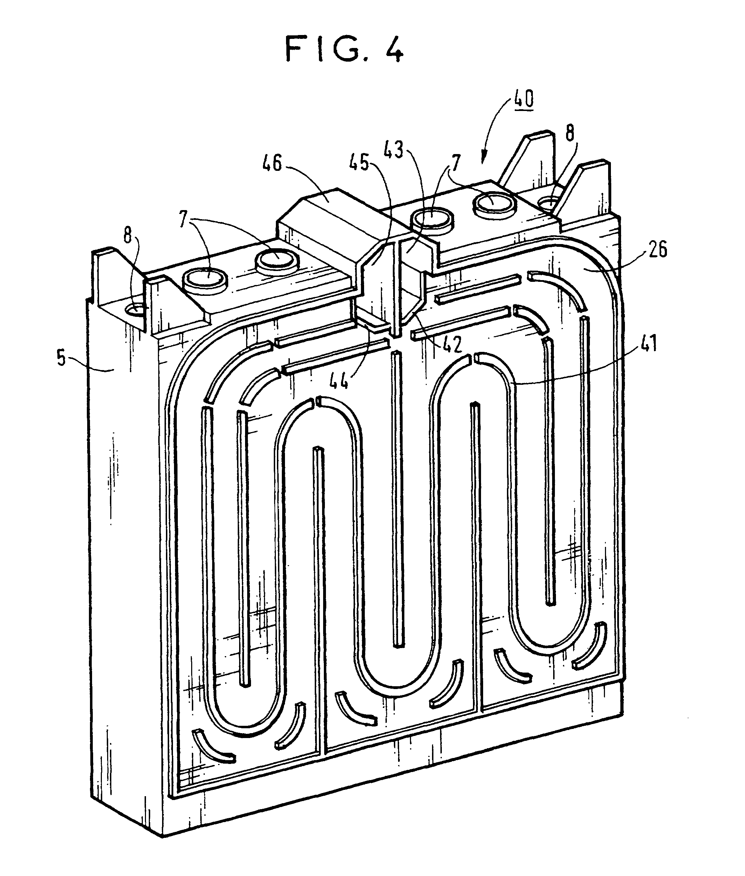

Le bac 2 est fabriqué à partir d'éléments 40 comportant deux alvéoles comme représenté sur la figure 4. Chaque élément 40 porte sur sa face supérieure quatre orifices 7 qui accueillent respectivement la borne positive et la borne négative raccordées électriquement au faisceau électrochimique contenu dans chaque alvéole. Chaque élément porte aussi deux orifices 8 permettant le remplissage en électrolyte de chacune des alvéoles. La paroi placée en vis-à-vis de la grande face des électrodes en faisceau, constitue un flasque 26. Le flasque 26 comporte des nervures 41 définissant un circuit pour le liquide caloporteur, un orifice d'entrée 42 du liquide communiquant avec une rampe distributrice 43 et un orifice de sortie 44 du liquide communiquant avec une rampe collectrice 45. Les nervures 41 et/ou les orifices 42, 44 peuvent être portés par moitié par chacun des flasques 26 placés en vis-à-vis. Les nervures 41 ont de l'ordre de 3 à 4mm de hauteur totale. La rampe distributrice 43 et la rampe collectrice 45 son accolées pour former une portion de rampe 46.

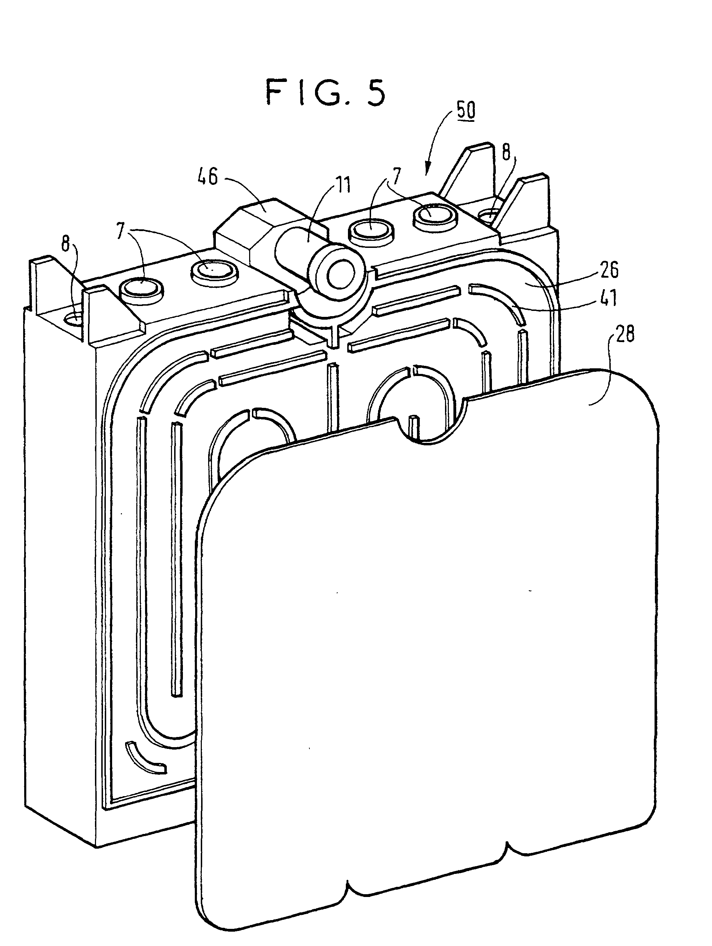

L'élément d'extrémité 50 de la batterie monobloc représenté sur la figure 5 est également double et analogue à celui de la figure 3, à l'exception de la portion de rampe 46 dont l'une des extrémités comporte une tubulure 51 pouvant être raccordée à un circuit extérieur. L'élément 50 peut être utilisé à chacune des extrémité de la batterie monobloc, ainsi la tubulure 51 peut être la tubulure 10 d'entrée du liquide ou bien la tubulure 11 de sortie du liquide qui sont identiques. Cet élément d'extrémité 50 est relié d'un côté à un élément 40. Du côté opposé à la jonction avec un élément 40, la paroi placée en vis-à-vis de la grande face du faisceau constitue un premier flasque 26 qui coopère avec la plaque d'extrémité 28 constituant le second flasque. Le compartiment de circulation du liquide situé à l'extrémité de la batterie est ainsi fermé. Les nervures 41 peuvent être portés par moitié par le flasque 26 et par la plaque 28 placés en vis-à-vis.

Bien entendu on peut aussi utiliser un élément 40 à l'extrémité de la batterie en ajustant simplement un raccord adapté à l'extrémité de la portion de rampe 46. Mais dans ce cas les faisceaux électrochimiques contenus dans les alvéoles 20' ne bénéficient pas d'un refroidissement sur leurs deux faces, ce qui entraîne un déséquilibre dans leur fonctionnement.

## Revendications

1. Batterie monobloc comprenant un bac divisé en alvéoles recevant chacune un faisceau électrochimique, un moyen de fermeture dudit bac, et un dispositif d'échange thermique par un fluide en regard des grandes faces dudit faisceau, la circulation dudit fluide s'effectuant dans un compartiment défini par deux flasques, ledit compartiment comportant un orifice d'entrée dudit fluide communiquant avec une rampe distributrice commune et un orifice de sortie dudit fluide communiquant avec une rampe collectrice commune, **caractérisée en ce que** ledit bac se compose d'au moins deux éléments juxtaposés sensiblement identiques, chaque élément formé d'une seule pièce comprend au moins une desdites alvéoles délimitée par au moins une paroi située en regard d'une grande face dudit faisceau qui constitue l'un desdits flasques, et **en ce que** chaque élément comporte en outre une portion de ladite rampe distributrice et de ladite rampe collectrice, lesdits éléments étant solidarisés de telle manière que lesdits flasques une fois placés face-à-face forment un compartiment de circulation étanche et que lesdites portions d'une même rampe soient dans le prolongement l'une de l'autre.

2. Batterie selon la revendication 1, dans laquelle ceux desdits éléments placés aux extrémités de ladite batterie sont reliés, du côté opposé aux autres éléments, à une plaque constituant l'un desdits flasques.

3. Batterie selon l'une des revendications 1 et 2, dans laquelle ledit moyen de fermeture est situé à la partie inférieure dudit bac et constitue un fond fixé de manière étanche audit bac.

4. Batterie selon l'une des revendications précédentes, dans laquelle ladite rampe distributrice et ladite rampe collectrice sont placées sur la face dudit bac opposée audit moyen de fermeture.

5. Batterie selon l'une des revendications précédentes, dans laquelle au moins l'un desdits flasques porte une pluralité de nervures, lesdites nervures formant des chicanes pour la circulation dudit fluide dans ledit compartiment, alternativement dans une direction et dans la direction opposée.

6. Procédé de fabrication d'une batterie selon l'une des revendications précédentes, comprenant les étapes suivantes:
- on moule d'un seul tenant au moins deux desdits éléments,
- on place côte à côte lesdits éléments de telle sorte que lesdits flasques soit appliqués l'un contre l'autre et que lesdites portions de rampe se correspondent,
- on soude de manière étanche la périphérie dudit compartiment formé par lesdits flasques et les parois desdites portions de rampe et on obtient ledit bac,
- on introduit un faisceau électrochimique dans chaque alvéole,
- on soude ledit fond sur ledit bac.

7. Procédé de fabrication d'une batterie selon la revendication 7, dans lequel, après avoir soudé de manière étanche la périphérie dudit compartiment formé par lesdits flasques et les parois desdites portions de rampe, on soude une plaque constituant un flasque à chaque extrémité pour obtenir ledit bac.

## Patentansprüche

1. Blockbatterie, umfassend einen Kasten der in Zellen aufgeteilt ist, wobei jede Zelle einen elektrochemischen Stapel aufnimmt, Mittel zum Verschließen des Kastens und eine Wärmeaustauschvorrichtung für ein Fluid gegenüber der großen Flächen des Stapels, wobei die Zirkulation des Fluids in einem bestimmten Abteil erfolgt, welches durch zwei Seitenwände definiert wird, und wobei dieses Abteil eine Eingangsöffnung für das Fluid, welche mit einer gemeinsamen Verteilerrampe kommuniziert, und eine Ausgangsöffnung für das Fluid, welche mit einer gemeinsamen Sammelrampe kommuniziert, umfasst, **dadurch gekennzeichnet, dass** der Kasten aus mindestens zwei nebeneinander liegenden, nahezu identischen Elementen besteht, wobei jedes Element, das aus einem einzigen Stück gebildet ist, mindestens eine dieser Zellen umfasst, die durch mindestens eine Wand begrenzt ist, welche gegenüber einer großen Fläche des Stapels angeordnet ist, die eine dieser Seitenwände bildet, und dass jedes Element außerdem einen Bereich dieser Verteilerrampe und dieser Sammelrampe enthält, wobei diese Elemente in der Weise miteinander verbunden sind, dass die Seitenwände, indem sie gegenüberliegend angeordnet sind, ein wasserdichtes Zirkulationsabteil bilden und dass die Bereiche einer gleichen Rampe in Verlängerung zueinander liegen.

2. Batterie nach Anspruch 1, in der diejenigen der genannten Elemente, die an den äußeren Enden der Batterie angeordnet sind, auf der den anderen Elementen gegenüberliegenden Seite mit einer Platte verbunden, welche eine der Seitenwände bildet.

3. Batterie nach Anspruch 1 oder 2, in der das Mittel zum Verschließen an der Unterseite des Kastens angeordnet ist und einen Boden bildet, der in wasserdichter Weise am Kasten befestigt ist.

4. Batterie nach einem der vorhergehenden Ansprüche, in der die Verteilerrampe und die Sammelrampe auf der dem Mittel zum Verschließen gegenüberliegenden Seite des Kastens angeordnet sind.

5. Batterie nach einem der vorhergehenden Ansprüche, in der mindestens eine der Seitenwände eine Vielzahl von Rippen besitzt, wobei die Rippen Schikanen für die Zirkulation des Fluids im Abteil bilden, abwechselnd in eine Richtung und in die entgegengesetzte Richtung.

6. Verfahren zur Herstellung einer Batterie gemäß einem der vorhergehenden Ansprüche, umfassend die folgenden Schritte:
- Formen mindestens zweier einstückiger Elemente,
- nebeneinander Anordnen der Elemente in der Weise, dass die Seitenwände gegenüberliegend angebracht sind und dass die Rampenbereiche zusammenpassen,
- wasserdichtes Zusammenschweißen der Peripherie des durch die Seitenwände gebildeten Abteils und der Wände der Rampenbereiche, um den Kasten zu erhalten,
- Einführen eines elektrochemischen Stapels in jede Zelle,
- Anschweißen des Bodens an den Kasten.

7. Verfahren zur Herstellung einer Batterie nach Anspruch 6, wobei nach dem wasserdichten Zusammenschweißen der Peripherie des durch die Seitenwände gebildeten Abteils und der Wände der Rampenbereiche eine Platte, welche eine Seitenwand bildet, an jede Außenseite geschweißt wird, um den Kasten zu erhalten.

## Claims

1. A one-piece battery comprising a tank divided into cells each receiving an electrode assembly, closure means for said tank and a circulating fluid type heat exchanger facing relatively larger faces of said assembly, wherein said fluid flows in a compartment defined by two flanges, said compartment having a fluid inlet orifice communicating with a common inlet manifold and a fluid outlet orifice communicating with a common outlet manifold, **characterized in that** said tank comprises at least two units, each unit comprises at least one of said cells delimited by at least one wall facing a relatively larger face of said assembly that constitutes one of said flanges, each unit further comprises a portion of said inlet manifold and said outlet manifold, and said units are fastened together so that said flanges when placed face-to-face form a sealed circulation compartment and said portions of the same manifold are aligned with each other.

2. The battery claimed in claim 1 wherein the units at the ends of said battery are connected on the side opposite the other units to a plate constituting one of said flanges.

3. The battery claimed in claim 1 or 2, wherein said closure means are in the lower part of said tank and constitute a bottom fixed and sealed to said tank.

4. The battery according to any one of the preceding claims wherein said inlet manifold and said outlet manifold are on the face of said tank opposite said closure means.

5. The battery according to any one of the preceding claims wherein at least one of said flanges incorporates a plurality of ribs and said ribs form chicanes for causing said fluid to flow in said compartment alternately in one direction and the opposite direction.

6. A method of manufacturing a battery as claimed in any one of the preceding claims, comprising the following steps:
- at least two of said units are molded in one piece,
- said units are placed side-by-side so that said flanges are pressed together and said manifold portions match up,
- the periphery of said compartment formed by said flanges and the walls of said manifold portions are welded and sealed to obtain said tank,
- an electrode assembly is introduced into each cell, and
- said bottom is welded to said tank.

7. The method claimed in claim 6 wherein, after welding and sealing the periphery of said compartment formed by said flanges and the walls of said manifold portions, a plate constituting a flange is welded to each end to obtain said tank.
